# EUROPÄISCHE PATENTSCHRIFT

(11) **EP 0 600 249 B1**
(45) Veröffentlichungstag und Bekanntmachung des Hinweises auf die Patenterteilung: **10.09.1997**
(21) Anmeldenummer: 93117811.5
(22) Anmeldetag: 03.11.1993
(51) Int. Cl.: B23K 26/00, B23K 26/14

(54) **Verfahren zum materialabtragenden Bearbeiten eines Werkstückes mittels eines Laserstrahles und Laserdüse**
Procedure for material removing treatment of work pieces with laser beam and laser nozzle
Procédé pour l'usinage d'une pièce par enlèvement de matière avec un rayon et une buse laser

(30) Priorität: 30.11.1992 DE 4240190
(43) Veröffentlichungstag der Anmeldung: 08.06.1994
(73) Patentinhaber: Linde Aktiengesellschaft, 65189 Wiesbaden (DE)
(72) Erfinder: Herrmann, Johann, D-85716 Unterschleissheim (DE)
(74) Vertreter: Kasseckert, Rainer

(56) Entgegenhaltungen:
- DE-A- 4 016 181
- DE-A- 4 108 541
- GB-A- 2 064 399
- US-A- 4 467 171
- PATENT ABSTRACTS OF JAPAN vol. 8, no. 224 (M-331) 13. Oktober 1984 & JP-A-59 104 289 (SHIN NIPPON SEITETSU KK) 16. Juni 1984
- PATENT ABSTRACTS OF JAPAN vol. 8, no. 197 (M-324) 11. September 1984 & JP-A-59 087 996 (ISHIKAWAJIMA HARIMA JUKOGYO KK) 21. Mai 1984

## Beschreibung

Die Erfindung betrifft ein Verfahren zur materialabtragenden Bearbeitung von Werkstücken mittels eines fokussierten Laserstrahles und eines Arbeitsgasstrahles, die beide durch eine Laserdüse parallel auf das Werkstück geführt werden.

Die Erfindung betrifft weiter ein Verfahren zur materialabtragenden Bearbeitung von Werkstücken mittels eines fokussierten Laserstrahles, der durch eine Laserdüse auf das Werkstück geführt wird, ohne daß der Laserstrahl mit einem Arbeitsgasstrahl durch die Laserdüse auf das Werkstück geführt wird.

Die Erfindung betrifft darüber hinaus eine Laserdüse zur materialabtragenden Bearbeitung eines Werkstückes mittels eines fokussierten Laserstrahles und gegebenenfalls mittels eines Arbeitsgasstrahles mit einem zentral angeordneten Düsenkanal für den Laserstrahl und gegebenenfalls das Arbeitsgas, wobei um den zentralen Düsenkanal mehrere symmetrisch angeordnete Zusatzkanäle eingebaut sind.

In vielen Fällen kann die Werkstückbearbeitung mit einem Laser konventionelle Verfahren ersetzen. So werden Laser beispielsweise zum Schneiden von Werkstücken eingesetzt. Aber auch die Werkstückoberfläche bearbeitende konventionelle Verfahren wie Senkerodieren, Fräsen oder Gravieren können durch den Einsatz von Lasern ersetzt werden.

Beim Oberflächenabtragen oder Schneiden eines Werkstückes mit einem Laser wird zu entfernendes Material des Werkstückes durch die über die Laserstrahlung eingebrachte Energie aufgeschmolzen und/oder verdampft, wobei eine qualitativ hochwertige Bearbeitung voraussetzt, daß das aufgeschmolzene bzw. verdampfte Material sich nicht wieder auf der Werkstückoberfläche anlagert. In der Regel wird daher zum Abtransport dieses Materials und zum Schutz der optischen Elemente ein Arbeitsgas auf die zu bearbeitende Werkstückstelle geleitet.

Aus der deutschen Patentanmeldung DE 41 08 541 A1 ist bekannt, die Anlagerung von verdampften Material unter Ausnutzung elektrostatischer Kräfte zu verhindern.

Der verwendete Arbeitsgasstrahl kann aus inerten Gasen wie He, Ar, N₂, Gemischen hieraus oder aus reaktiven Gasen wie O₂, CO₂, Gemischen hieraus oder CO₂- und/oder O₂-haltigen Gasgemischen bestehen. Reaktive Gase unterstützen dabei das Abtragen des Materials vom Werkstück. Das Verfahren weist den Nachteil auf, daß es lediglich für Werkstücke aus elektrostatisch aufladbarem Material anwendbar ist.

Der nächstkommende Stand der Technik nach der deutschen Patentanmeldung DE 40 16 181 A1 offenbart ein Verfahren zum Laserschneiden bekannt, wobei zusätzlich zum Arbeitsgas ein Hilfsgas eingesetzt wird. Dabei besteht das Arbeitsgas aus einem bekannten Schneidgas und das Hilfsgas aus verbrannten Produkten eines Brenngas-Luft- oder Brenngas-Sauerstoffgemisches, aus einem elektrisch oder indirekt durch den Laserstrahl erhitzten Gas oder Gasgemisch oder einem kalten Gas oder Gasgemisch. Als Brenngase werden Wasserstoff, Propan, Methan, Acetylen und/oder Ethylen genannt. Als kalte Gase werden vorzugsweise Stickstoff, Sauerstoff, Druckluft, Argon, Helium, CO₂ und Gemische daraus eingesetzt. Für dieses Laserschneidverfahren wird eine Laserdüse benutzt, die zusätzlich zum zentralen Düsenkanal für den Laserstrahl und das Schneidgas einen oder mehrere Zusatzkanäle für das Hilfsgas vorsieht. Die Zusatzkanäle sind spiegelsymmetrisch bezüglich einer beliebigen die Mittelachse der Laserdüse enthaltende Ebene angeordnet. Die Austrittsenden der Zusatzkanäle sind in die Laserdüse parallel zur Mittelachse der Laserdüse eingebaut, so daß das Hilfsgas die Laserdüse parallel zum Laserstrahl und Arbeitsgasstrahl verläßt. Der Arbeitsgasstrahl wird durch das Hilfsgas mit einem Gasschleier umhüllt, um zu verhindern, daß Umgebungsluft vom Schneidgas mitgerissen wird, und, um den Schneidgasstrahl zu stabilisieren. Das wird dadurch erreicht, daß das Hilfsgas eine wesentlich geringere Austrittsgeschwindigkeit aus der Laserdüse aufweist als das Arbeitsgas. Dieses Verfahren ermöglicht zwar ein Laserstrahlbrennschneiden auch bei größeren Materialdicken und eine Verbesserung der Schnittqualität bei diesem Verfahren durch Reduzierung der Oxidation der Schnittflächen und durch Verhinderung der Bildung von Kolkungen, aber unterstützt nicht den Abtransport von aufgeschmolzenem oder verdampften Material, um eine erneute Anlagerung zu unterbinden.

Der Erfindung liegt daher die Aufgabe zugrunde, Verfahren und eine Laserdüse aufzuzeigen, die unabhängig von der Bearbeitungsrichtung und von der Materialart des Werkstückes eine hohe Bearbeitungsqualität sicherstellt, indem verhindert wird, daß verdampftes Material kondensiert und sich auf dem Werkstück anlagert oder daß sich verflüssigtes Material in unerwünschter Weise verfestigt.

Diese Aufgabe wird erfindungsgemäß für den Einsatz eines Arbeitsgases dadurch gelöst, daß als zusätzliches Gas zum Arbeitsgas ein Abtragsgas durch die Laserdüse gegen das Werkstück geführt wird, wobei das Abtragsgas aus inerten oder reaktiven Gasen oder aus diese enthaltenden Gasgemischen besteht und mit einer größeren Austrittsgeschwindigkeit aus der Laserdüse strömt als das Arbeitsgas.

Überraschenderweise hat sich nämlich gezeigt, daR eine Erhöhung der Bearbeitungsqualität in materialabtragenden Verfahren dadurch erreichbar ist, daß das Abtragsgas mit einer höheren Austrittsgeschwindigkeit versehen wird als das Arbeitsgas. Durch die Wahl des geringen Arbeitsgasdruckes und eines höheren Druckes für das Abtragsgas wird direkt an der Bearbeitungsstelle ein Unterdruck erzeugt, der die Ablösung von aufgeschmolzenem Material unterstützt. Durch den scharfen Abtragsgasstrahl wird vom Werkstück abgetragenes, geschmolzenes und/oder verdampftes Material von der Bearbeitungsstelle weggetragen.

Vorteilhafterweise wird das Abtragsgas, bevorzugt in mehreren Abtragsgasstrahlen, zwar auf das Werkstück, nicht aber auf die Bearbeitungsstelle des Werkstückes geleitet. Das Arbeitsgas ist unmittelbar auf die Bearbeitungsstelle gerichtet.

Es sind ohne weiteres auch Verfahren ohne den Einsatz eines Arbeitsgases denkbar. Diese sind insbesondere dann sinnvoll, wenn im Laserbearbeitungskopf keine Fokusierlinse(n) oder andere vor auftreffenden Werkstückteilchen durch das Arbeitsgas zu schützenden optischen Elemente für den Laserstrahl in Reichweite der von der Bearbeitungsstelle weggeschleuderten Werkstückteilchen eingebaut sind. Dies ist in der Regel beim Einsatz von Umlenkspiegeln im oder über dem Laserbearbeitungskopf der Fall.

Die der Erfindung zugrundeliegende Aufgabe wird erfindungsgemäß für ein Verfahren ohne den Einsatz eines Arbeitsgases dadurch gelöst, daß durch die Laserdüse ein Abtragsgas über mehrere Zusatzkanäle gegen das Werkstück geführt wird, wobei das Abtragsgas aus inerten oder reaktiven Gasen oder aus diese enthaltenden Gasgemischen besteht.

Da die Abtragsgasstrahlen nicht auf die Bearbeitungsstelle des Werkstückes, sondern an ihr vorbei gerichtet sind, reißen sie Gasatome und Gasmoleküle mit, so daß in dem Raum direkt unter der Laserdüse und über dem Werkstück ein (gegebenenfalls zusätzlicher) Unterdruck erzeugt wird. Die Verfahren können überall dort eingesetzt werden, wo unabhängig von der Bearbeitungsrichtung Material entfernt bzw. abgetragen werden muß.

Als Abtragsgase eignen sich alle für die Materialbearbeitung mittels eines Lasers bekannten inerten oder reaktiven Gase wie beispielsweise Luft, Sauerstoff, Stickstoff, Argon , Helium, CO₂ und/oder Gemische daraus.

Bevorzugt weist das Abtragsgas neben einer Geschwindigkeitskomponente in Richtung der Mittelachse von Laserstrahl und gegebenenfalls Arbeitsgasstrahl eine Geschwindigkeitskomponente auf, die, senkrecht hierzu, tangential zur zentrischen Öffnung in der Laserdüse für Laserstrahl und gegebenenfalls Arbeitsgas gerichtet ist. Auf diese Weise wird um die Bearbeitungsstelle eine Drallströmung erzeugt, die vom Werkstück abgetrenntes Material schnell von der Bearbeitungsstelle weg nach außen transportiert.

Vorteilhafterweise wird das Abtragsgas unter einem Winkel zwischen 10° und 80°, vorzugsweise zwischen 40° und 80°, besonders bevorzugt zwischen 50° und 70°, bezüglich der Richtung der Mittelachse von Laserstrahl und Arbeitsgasstrahl gegen die Werkstückoberfläche geleitet.

In Weiterbildung des erfindungsgemäßen Verfahrens wird das Abtragsgas über einen Ringkanal in die Zusatzkanäle eingespeist, bevor das Abtragsgas über diese Zusatzkanäle auf das Werkstück geleitet wird.

Bei der die Erfindung betreffenden Laserdüse sind erfindungsgemäß die Zusatzkanäle für ein Abtragsgas bezüglich der Mittelachse der Laserdüse für Laserstrahl und gegebenenfalls Arbeitsgas rotationssymmetrisch, aber nicht achssymmetrisch bezüglich einer beliebigen Fläche durch die Mittelachse der Laserdüse angeordnet. Durch diese Anordnung der Zusatzkanäle der Laserdüse kann, unabhängig von der Bearbeitungsrichtung, abgetragenes Material sofort seitlich weggeblasen werden. Gleichzeitig wird ein Unterdruck über der Bearbeitungsstelle erzeugt.

Die beschriebene Laserdüse ist üblicherweise in einen Bearbeitungskopf einer Laseranlage zur materialabtragenden Bearbeitung eingebaut. Das Nachrüsten einer bereits bestehenden Laseranlage mit einer erfindungsgemäßen Laserdüse ist daher mit keinerlei Problemen verbunden. Die Laserdüse kann aus einem Stück gefertigt sein oder aus zu einer Laserdüse zusammengebauten Einzelteilen bestehen.

Vorteilhafterweise führt, in Aufsicht betrachtet, eine gedachte Verlängerung einer Seitenwand eines Zusatzkanals in Richtung der Mittelachse der Laserdüse tangential auf die Berandung der zentrale Auftrittsöffnung für den Laserstrahl und gegebenfalls das Arbeitsgas. Diese Anordnung ermöglicht beim Einsatz von Arbeitsgas eine ungestörte Arbeitsgaszufuhr an die Bearbeitungsstelle, gewährleistet aber gleichzeitig ein effektives Wegblasen des abgetragenen Materials von der Bearbeitungsstelle und die Erzeugung eines merklichen Unterdruckes an der Bearbeitungsstelle, da das Abtragsgas dicht an der Bearbeitungsstelle vorbei geleitet wird.

Bevorzugt verlaufen die Zusatzkanäle mit einer konstanten Querschnittsfläche in ihrer Durchströmungsrichtung. Wegen ihrer einfachen Herstellung werden die Zusatzkanäle vorzugsweise mit einer kreisförmigen oder rechteckförmigen Querschnittsfläche versehen.

In Ausgestaltung der Laserdüse ist erfindungsgemäß symmetrisch um den zentralen Düsenkanal für den Laserstrahl und gegebenenfalls das Arbeitsgas ein Ringkanal für das Abtragsgas mit Zuleitung angeordnet, von dem die Zusatzkanäle zur Laserdüsenspitze führen. Vorteilhafterweise enthält die Laserdüse zumindest zwei, vorzugsweise vier bis acht, Zusatzkanäle. Erfindungsgemäß sind die Zusatzkanäle unter einem Winkel zwischen 10° und 80°, vorzugsweise zwischen 40° und 80°, besonders bevorzugt zwischen 50° und 70° bezüglich der Mittelachse der Laserdüse angeordnet. Die Form des zentralen Düsenkanals kann durch eingebaute Einsätze bestimmt und durch Austausch dieser Einsätze leicht verändert werden. Der zentrale Düsenkanal und/oder die Zusatzkanäle können in der Laserdüse austauschbar eingebaut sind.

Die Erfindung wird im folgenden anhand eines in zwei Figuren dargestellten Ausführungsbeispieles näher erläutert.

Hierbei wird eine erfindungsgemäße Laserdüse in:
- Fig. 1: in Aufsicht und in
- Fig. 2: in Seitenansicht gezeigt.

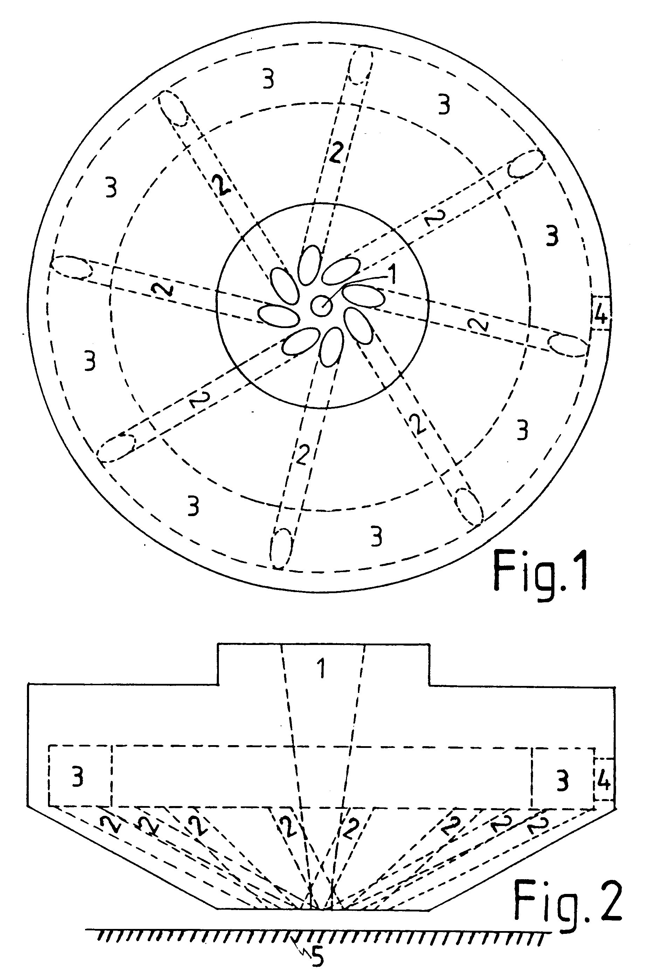

Die in Fig. 1 in Aufsicht und in Fig. 2 in Seitenansicht dargestellte Laserdüse weist einen zentral angeordneten Düsenkanal 1 auf, durch den der fokussierte Laserstrahl und das Arbeitsgas gegen die Bearbeitungsstelle des Werkstückes 5 geführt werden. Der Laserstrahl wird durch eine nicht dargestellte Fokussierlinse gebündelt. Der Fokus der Laserstrahlung liegt dabei in der Regel unterhalb der Werkstückoberfläche (Bearbeitungsstelle). Er kann aber auch auf der Werkstückoberfläche bzw. oberhalb des Werkstückes liegen. Der Arbeitsgastrahl wird direkt auf die Bearbeitungsstelle geleitet.

Neben dem zentral angeordneten Düsenkanal 1 enthält die Laserdüse acht rotationssymmetrisch bezüglich der Mittelachse des zentralen Düsenkanals 1 angeordnete Zusatzkanäle 2. Wie in der Aufsicht in Fig. 1 deutlich erkennbar ist, sind diese Zusatzkanäle 2 in die Laserdüse so eingebaut, daß eine gedachte Verlängerung jeweils der linken Seitenwand der Zusatzkanäle 2 tangential auf den Rand der Austrittsöffnung des zentralen Düsenkanals 1 führen würde. Der Neigungswinkel der Zusatzkanäle 2 gegenüber der Mittelachse des zentralen Düsenkanals 1 beträgt im dargestellten Ausführungsbeispiel 63°.

Das Abtragsgas wird über eine Zuleitung 4 und einen Ringkanal 3 in die Zusatzkanäle 2 eingespeist.

## Patentansprüche

1. Verfahren zur materialabtragenden Bearbeitung von Werkstücken (5) mittels eines fokussierten Laserstrahles und eines Arbeitsgasstrahles, die beide durch eine Laserdüse parallel auf das Werkstück (5) geführt werden, **dadurch gekennzeichnet**, daß als zusätzliches Gas zum Arbeitsgas ein Abtragsgas durch die Laserdüse gegen das Werkstück (5) geführt wird, wobei das Abtragsgas aus inerten oder reaktiven Gasen oder aus diese enthaltenden Gasgemischen besteht und mit einer größeren Austrittsgeschwindigkeit aus der Laserdüse strömt als das Arbeitsgas.

2. Verfahren nach Anspruch 1, dadurch gekennzeichnet, daß das Abtragsgas über mehrere Zusatzkanäle (2) auf das Werkstück (5) geleitet wird.

3. Verfahren zur materialabtragenden Bearbeitung von Werkstücken (5) mittels eines fokussierten Laserstrahles, der durch eine Laserdüse auf das Werkstück (5) geführt wird, ohne daß der Laserstrahl mit einem Arbeitsgasstrahl durch die Laserdüse auf das Werkstück (5) geführt wird, **dadurch gekennzeichnet**, daß durch die Laserdüse ein Abtragsgas über mehrere Zusatzkanäle (2) gegen das Werkstück (5) geführt wird, wobei das Abtragsgas aus inerten oder reaktiven Gasen oder aus diese enthaltenden Gasgemischen besteht.

4. Verfahren nach einem der Ansprüche 1 bis 3, dadurch gekennzeichnet, daß das Abtragsgas nicht auf die Bearbeitungsstelle des Werkstückes (5) gerichtet ist.

5. Verfahren nach einem der Ansprüche 1 bis 4, dadurch gekennzeichnet, daß das Abtragsgas neben einer Geschwindigkeitskomponente in Richtung der Mittelachse von Laserstrahl und gegebenenfalls Arbeitsgasstrahl eine Geschwindigkeitskomponente aufweist, die, senkrecht hierzu, tangential zur zentrischen Öffnung in der Laserdüse für Laserstrahl und gegebenenfalls Arbeitsgas gerichtet ist.

6. Verfahren nach Anspruch 1 bis 5, dadurch gekennzeichnet, daß das Abtragsgas unter einem Winkel zwischen 10° und 80°, vorzugsweise 40° bis 80°, besonders bevorzugt 50° bis 70° bezüglich der Richtung der Mittelachse von Laserstrahl und Arbeitsgasstrahl gegen die Werkstückoberfläche (5) geleitet wird.

7. Verfahren nach einem der Ansprüche 2 bis 6, dadurch gekennzeichnet, daß das Abtragsgas über einen Ringkanal in die Zusatzkanäle eingespeist wird.

8. Laserdüse zur materialabtragenden Bearbeitung eines Werkstückes mittels eines fokussierten Laserstrahles und gegebenenfalls mittels eines Arbeitsgasstrahles mit einem zentral angeordneten Düsenkanal (1) für den Laserstrahl und gegebenenfalls für das Arbeitsgas, wobei um den zentralen Düsenkanal (1) mehrere symmetrisch angeordnete Zusatzkanäle (2) eingebaut sind, **dadurch gekennzeichnet**, daß die Zusatzkanäle (2) für ein inertes oder reaktives Abtragsgas bezüglich der Mittelachse des zentralen Düsenkanales (1) für den Laserstrahl und gegebenenfalls für das Arbeitsgas rotationssymmetrisch, aber bezüglich einer beliebigen Ebene durch die Mittelachse der Laserdüse nicht spiegelsymmetrisch angeordnet sind.

9. Laserdüse nach Anspruch 8, dadurch gekennzeichnet, daß in Aufsicht in Richtung der Mittelachse der Laserdüse eine gedachte Verlängerung der Seitenwand eines Zusatzkanales (2) tangential auf die Berandung der Austrittsöffnung des zentralen Düsenkanals (1) für Laserstrahl und gegebenenfalls Arbeitsgas führt.

10. Laserdüse nach Anspruch 8 oder 9, dadurch gekennzeichnet, daß die Zusatzkanäle (2) eine über ihre Länge konstante Querschnittsfläche aufweisen.

11. Laserdüse nach einem der Ansprüche 8 bis 10, dadurch gekennzeichnet, daß symmetrisch um den zentralen Düsenkanal (1) ein Ringkanal (3) für das Abtragsgas mit Zuleitung (4) angeordnet ist, von dem die Zusatzkanäle zur Laserdüsenspitze führen.

12. Laserdüse nach einem der Ansprüche 8 bis 11, dadurch gekennzeichnet, daß die Zusatzkanäle (2) unter einem Winkel zwischen 10° und 80°, vorzugsweise zwischen 40° und 80°, besonders bevorzugt zwischen 50° und 70°, bezüglich der Mittelachse der Laserdüse angeordnet sind.

13. Laserdüse nach einem der Ansprüche 8 bis 12, dadurch gekennzeichnet, daß die Laserdüse zumindest zwei, vorzugsweise vier bis acht Zusatzkanäle (2) enthält.

14. Laserdüse nach einem der Ansprüche 8 bis 13, dadurch gekennzeichnet, daß die Form des zentralen Düsenkanals (1) bestimmende Einsätze in den zentralen Düsenkanal eingebaut sind.

15. Laserdüse nach einem der Ansprüche 8 bis 14, dadurch gekennzeichnet, daß der zentrale Düsenkanal (1) und/oder die Zusatzkanäle (2) in der Laserdüse austauschbar eingebaut sind.

## Claims

1. Process for the material-removing machining of workpieces (5) using a focused laser beam and a working-gas jet, which are both guided in parallel onto the workpiece (5) by means of a laser nossel, characterized in that an abrading gas is guided through the laser nossel towards the workpiece (5) as an additional gas to the working gas, the abrading gas comprising inert or reactive gases or gas mixtures including the latter and flowing out of the laser nossel at a greater exit speed than the working gas.

2. Process according to Claim 1, characterized in that the abrading gas is directed onto the workpiece (5) via a plurality of additional ducts (2).

3. Process for the material-removing machining of workpieces (5) using a focused laser beam, which is guided onto the workpiece (5) through a laser nossel, without the laser beam being guided through the laser nossel onto the workpiece (5) together with a working-gas jet, characterized in that an abrading gas is guided towards the workpiece (5) through the laser nossel via a plurality of additional ducts (2), the abrading gas comprising inert or reactive gases or gas mixtures including the latter.

4. Process according to one of Claims 1 to 3, characterized in that the abrading gas is not directed onto the machining point of the workpiece (5).

5. Process according to one of Claims 1 to 4, characterized in that the abrading gas, in addition to a speed component in the direction of the central axis of laser beam and, if appropriate, working-gas jet, has a speed component which is directed, perpendicularly thereto, tangentially with respect to the central opening in the laser nossel for laser beams and, if appropriate, working gas.

6. Process according to Claims 1 to 5, characterized in that the abrading gas is directed towards the workpiece surface (5) at an angle of between 10° and 80°, preferably 40° to 80°, particularly preferably 50° to 70°, with respect to the direction of the centre axis of laser beam and working-gas jet.

7. Process according to one of Claims 2 to 6, characterized in that the abrading gas is fed into the additional ducts via an annular duct.

8. Laser nossel for the material-removing machining of a workpiece using a focused laser beam and, if appropriate, using a working-gas jet, having a centrally arranged nossel duct (1) for the laser beam and, if appropriate, for the working gas, a plurality of symmetrically arranged additional ducts (2) being incorporated around the central nossel duct (1), characterized in that the additional ducts (2) for an inert or reactive abrading gas are arranged in a rotationally symmetrical manner with respect to the centre axis of the central nossel duct (1) for the laser beam and, if appropriate, for the working gas but are not arranged mirror-symmetrically with respect to any desired plane through the centre axis of the laser nossel.

9. Laser nossel according to Claim 8, characterized in that, viewed in the direction of the centre axis of the laser nossel, an imaginary extension of the side wall of an additional duct (2) leads tangentially onto the rim of the exit opening of the central nossel duct (1) for laser beam and, if appropriate, working gas.

10. Laser nossel according to Claim 8 or 9, characterized in that the additional ducts (2) have a cross-sectional area which is constant over their length.

11. Laser nossel according to one of Claims 8 to 10, characterized in that an annular duct (3) for the abrading gas having seed line (4) is arranged symmetrically around the central nossel duct (1), from which annular duct (3) the additional ducts lead to the tip of the laser nossel.

12. Laser nossel according to one of Claims 8 to 11, characterized in that the additional ducts (2) are arranged at an angle of between 10° and 80°, preferably between 40° and 80°, particularly preferably between 50° and 70°, with respect to the centre axis of the laser nossel.

13. Laser nossel according to one of Claims 8 to 12, characterized in that the laser nossel contains at least two, preferably four to eight, additional ducts (2).

14. Laser nossel according to one of Claims 8 to 13, characterized in that inserts which determine the shape of the central nossel duct (1) are incorporated in the central nossel duct.

15. Laser nossel according to one of Claims 8 to 14, characterized in that the central nossel duct (1) and/or the additional ducts (2) are incorporated exchangeably in the laser nossel.

## Revendications

1. Procédé pour l'usinage de pièces (5) par enlèvement de matière au moyen d'un faisceau laser focalisé et d'un jet de gaz de travail, qui sont tous les deux conduits parallèlement sur la pièce (5) par une buse laser, caractérisé en ce qu'un gaz d'enlèvement est conduit, comme gaz supplémentaire au gaz de travail, vers la pièce (5) à travers la buse laser, le gaz d'enlèvement se composant de gaz inertes ou réactifs ou de mélanges de gaz contenant ceux-ci et s'échappant de la buse laser avec une vitesse de sortie plus grande que le gaz de travail.

2. Procédé suivant la revendication 1, caractérisé en ce que le gaz d'enlèvement est conduit sur la pièce (5) par plusieurs canaux supplémentaires (2).

3. Procédé pour l'usinage de pièces (5) par enlèvement de matière au moyen d'un faisceau laser focalisé, qui est conduit sur la pièce (5) par une buse laser sans que le faisceau laser soit conduit sur la pièce (5) avec un jet de gaz de travail par la buse laser, caractérisé en ce qu'un gaz d'enlèvement est conduit à travers la buse laser par plusieurs canaux supplémentaires (2) vers la pièce (5), le gaz d'enlèvement se composant de gaz inertes ou réactifs ou de mélanges contenant ceux-ci.

4. Procédé suivant l'une des revendications 1 à 3, caractérisé en ce que le gaz d'enlèvement est dirigé sur la zone d'usinage de la pièce (5).

5. Procédé suivant l'une des revendications 1 à 4, caractérisé en ce que le gaz d'enlèvement présente, en plus d'une composante de vitesse orientée dans la direction de l'axe central du faisceau laser et le cas échéant du jet de gaz de travail, une composante de vitesse qui, perpendiculairement à celle-ci, est orientée tangentiellement à l'ouverture centrale dans la buse laser pour le faisceau laser et le cas échéant le gaz de travail.

6. Procédé suivant les revendications 1 à 5, caractérlsé en ce que le gaz d'enlèvement est conduit vers la surface de la pièce (5) sous un angle compris entre 10° et 80°, de préférence entre 40° et 80°, et avec une préférence particulière entre 50° et 70°, par rapport à la direction de l'axe central du faisceau laser et du jet de gaz de travail.

7. Procédé suivant l'une des revendications 2 à 6, caractérisé en ce que le gaz d'enlèvement est fourni dans les canaux supplémentaires par un canal annulaire.

8. Buse laser pour l'usinage d'une pièce par enlèvement de matière au moyen d'un faisceau laser focalisé et le cas échéant au moyen d'un jet de gaz de travail, avec un canal (1) disposé au centre dans la buse pour le faisceau laser et le cas échéant pour le gaz de travail, dans laquelle plusieurs canaux supplémentaires (2) sont ménagés symétriquement autour du canal central (1) de la buse, caractérisée en ce que les canaux supplémentaires (2) pour un gaz d'enlèvement inerte ou réactif sont disposés avec une symétrie de révolution par rapport à l'axe central du canal central (1) de la buse pour le faisceau laser et le cas échéant pour le gaz de travail, mais ne sont pas disposés avec une symétrie de réflexion par rapport à un plan quelconque passant par l'axe central de la buse laser.

9. Buse laser suivant la revendication 8, caractérisée en ce qu'en regardant dans la direction de l'axe central de la buse laser, un prolongement virtuel de la paroi latérale d'un canal supplémentaire (2) conduit tangentiellement sur le bord de l'ouverture de sortie du canal central (1) de la buse pour le faisceau laser et le cas échéant le gaz de travail.

10. Buse laser suivant la revendication 8 ou 9, caractérisée en ce que les canaux supplémentaires (2) présentent une section transversale constante sur leur longueur.

11. Buse laser suivant l'une des revendications 8 à 10, caractérisée en ce qu'autour du canal central (1) de la buse est disposé symétriquement un canal annulaire (3) pour le gaz d'enlèvement avec une arrivée (4), a partir duquel les canaux supplémentaires conduisent à la pointe de la buse laser.

12. Buse laser suivant l'une des revendications 8 à 11, caractérisée en ce que les canaux supplémentaires (2) sont disposés sous un angle compris entre 10° et 80°, de préférence entre 40° et 80°, avec une préférence particulière entre 50° et 70°, par rapport à l'axe central de la buse laser.

13. Buse laser suivant l'une des revendications 8 à 12, caractérisée en ce que la buse laser comporte au moins deux, de préférence quatre à huit canaux supplémentaires (2).

14. Buse laser suivant l'une des revendications 8 à 13, caractérisée en ce que des pièces déterminant la forme du canal central (1) de la buse sont insérées dans le canal central de la buse.

15. Buse laser suivant l'une des revendications 8 à 14, caractérisée en ce que le canal central (1) de la buse et/ou les canaux supplémentaires (2) sont insérés de façon interchangeable dans la buse laser.
